# EUROPÄISCHE PATENTSCHRIFT

(11) **EP 0 980 984 B1**
(45) Veröffentlichungstag und Bekanntmachung des Hinweises auf die Patenterteilung: **30.06.2004**
(21) Anmeldenummer: 99108118.3
(22) Anmeldetag: 24.04.1999
(51) Int. Cl.: F16C 1/14, G05G 9/02

(54) **Hebel-Drahtzugverbindung**
Level-wire drawing connection
Jonction de levier avec tréfilage

(30) Priorität: 08.08.1998 DE 19835949
(43) Veröffentlichungstag der Anmeldung: 23.02.2000
(73) Patentinhaber: Preh GmbH, 97616 Bad Neustadt a.d. Saale (DE)
(72) Erfinder: Bauer, Karl-Heinz, 97616 Bad Neustadt (DE)
(74) Vertreter: Dietrich, Barbara

(56) Entgegenhaltungen:
- EP-A- 0 032 883
- EP-A- 0 181 477
- US-A- 4 483 211
- DATABASE WPI Section PQ, Week 199815 Derwent Publications Ltd., London, GB; Class Q12, AN 1998-164019 XP002900726 & JP 10 030371 A (KOMATSU SEISAKUSHO KK), 3. Februar 1998 (1998-02-03)

## Beschreibung

Die Erfindung betrifft eine Hebel-Drahtzugverbindung mit einer Hebelanordnung nach dem Oberbegriff des Patentanspruchs 1.

Diese Verbindung wird häufig in Kraftfahrzeugen eingesetzt und dient z. B. zur Verstellung von Verteilerklappen von Auslaßleitungen für kühle oder warme Luft mittels sogenannter Drahtzüge.

Aus der DE 34 34 302 C3 ist eine solche Verbindung als Bedieneinheit bekannt und besteht dort aus einem in ein Armaturenbrett einsetzbaren Grundkörper mit einer Frontplatte, in der ein oder mehrere Drehknöpfe gelagert sind, die jeweils ein erstes Kegelrad drehen, das auf ein zweites Kegelrad einwirkt, wobei beide Kegelräder ein Kegelradgetriebe mit senkrecht aufeinanderstehenden Drehachsen bilden.

Die jeweils zweiten Kegelräder weisen ein oder mehrere Führungsnuten für die Mitnahme von Stellhebeln auf, die andererseits mit den Drahtzügen zusammenwirken.

Bei den Stellhebeln handelt es sich hier um einarmige Hebel, die an einem Ende mit einem Drehzapfen in einem Drehlager des Grundkörpers eingesetzt sind und an dem anderen Ende den eingehängten Drahtzug tragen und dazwischenliegend einen Führungszapfen, der in die Führungsnut des zweiten Kegelrades eingreift.

Obwohl diese Bedieneinheit nach dem Stand der Technik bereits zufriedenstellend arbeitet, besteht doch Bedarf nach einer Ausführung, die platzsparender ist, einfacher und billiger herstellbar ist und darüber hinaus verbessert funktioniert.

Darüber hinaus ist es Ziel der Erfindung, Maßnahmen aufzufinden, mit denen eine vereinfachte Montage der Hebel-Drahtzugverbindung und ein vereinfachtes Einstecken und Sichern der Drahtzüge und der Drahtzughüllen erreichbar werden.

Diese Aufgabe ist durch die im Kennzeichen des Patentanspruchs 1 angegebenen Merkmale gelöst worden. Vorteilhafte Weiterbildungen sind mit den Unteransprüchen angegeben.

Eine erfindungsgemäße Hebel-Drahtzugverbindung ist in der Zeichnung dargestellt und wird nachfolgend beschrieben.

Die Zeichnung zeigt:
- **Fig. 1, 2 und 3**: Teilansichten eines Stellhebels eines Bedienelements in einem Armaturenbrett,
- **Fig. 4 und 5**: Ansichten des Stellhebels aus Fig. 1 in einer alternativen Ausbildung,
- **Fig. 6**: eine alternative Ausführung des Drahtzuges mit Kugel,
- **Fig. 7 und 8**: Ansichten einer weiteren Ausführung.

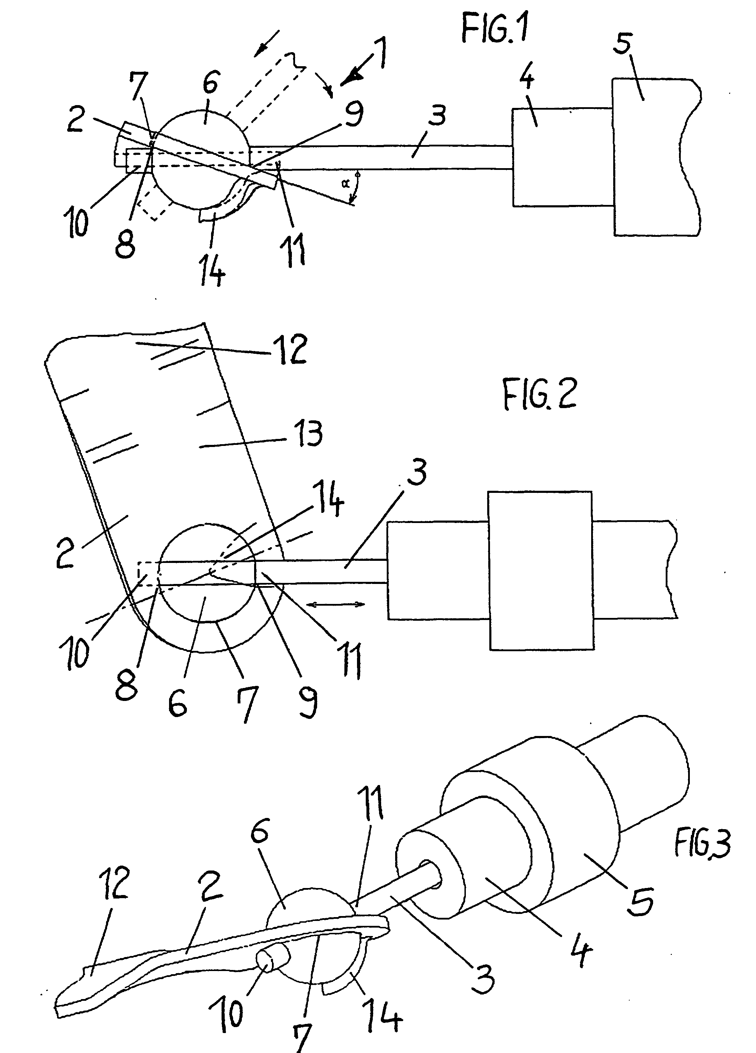

Fig. 1, 2 und 3 zeigen Ansichten einer erfindungsgemäßen Hebel-Drahtzugverbindung 1 mit einer Hebelanordnung 2, die mittels Drahtzug 3 und Drahtzughülle 4 betätigt wird, wobei die Drahtzughülle 4 bei mit dem Hebel 2 verbundenem Drahtzug 3 in ein gehäusefestes Widerlager 5 eingesteckt und dort gesichert ist.

Es ist nun vorgesehen, daß der Drahtzug 3 eine aufgepreßte oder angespritzte Kugel 6 aufweist, die mit dem Drahtzug 3 in eine zylindrische Hebelausnehmung 7 eingesetzt ist und innerhalb dieser Hebelausnehmung 7 in Axialrichtung der Hebelausnehmung 7 durch beiderseits des Hebels 2 an den Rändern 8, 9 der Hebelausnehmung 7 anliegende Drahtzugabschnitte 10, 11 gehalten ist.

Durch diese Maßnahmen läßt sich eine einfache Montage erreichen, und es liegt eine preiswerte Konstruktion vor.

Die Ausführung nach Fig. 1, 2 und 3 zeigt, daß der Drahtzug 3 bei eingesteckter und gesicherter Drahtzughülle 4 und an den Rändern 8, 9 der Hebelausnehmung 7 anliegenden Drahtzugabschnitten 10, 11 in etwa parallel zur Hebelgrundfläche 12 steht und ein Hebelabschnitt 13 gegenüber der Hebelgrundfläche 12 unter einem spitzen Winkel α abgebogen ist.

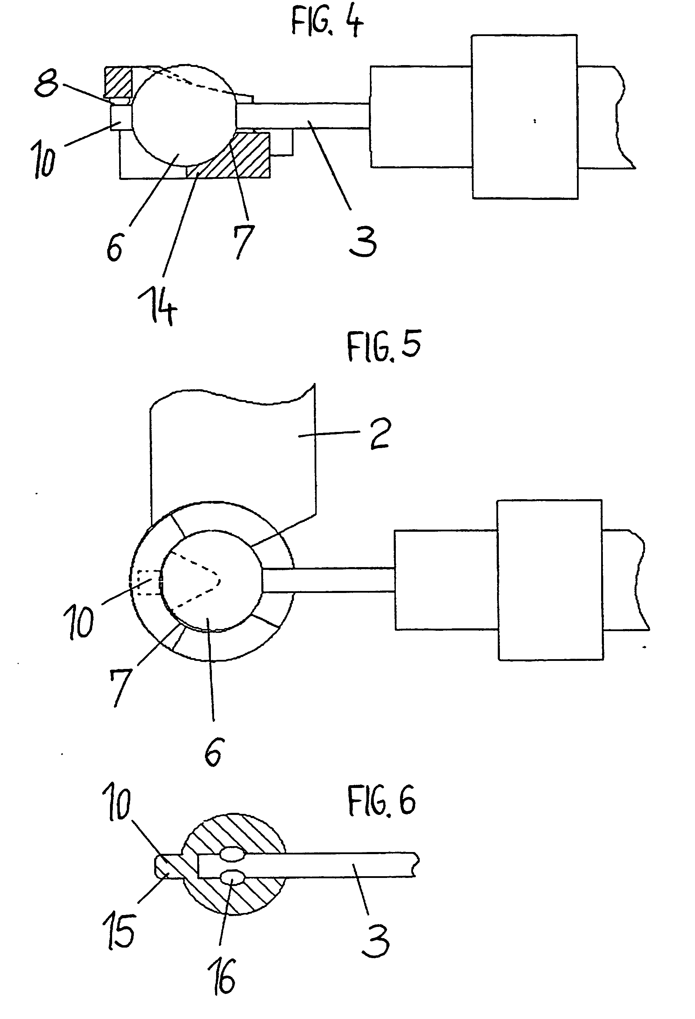

Fig. 4 und 5 zeigen eine alternative Ausführung der Hebelausnehmung 7 in einem Formteil 15, das entweder einstückig mit dem Hebel 2 selbst besteht oder zum Beispiel an diesem angespritzt ist, bei dem der Drahtzug 3 bei eingesteckter und gesicherter Drahtzughülle 4 ebenfalls an den Rändern 8, 9 der Hebelausnehmung 7 anliegt.

Es hat sich bei beiden Ausführungen als vorteilhaft herausgestellt, daß die Hebelausnehmung 7 in allen Ausführungen einen kugelkalottenförmig ausgeformten Ansatz 14 aufweist, der ein Durchstecken der zwischen den Drahtzugabschnitten 10, 11 befindlichen Kugel 6 durch die Hebelausnehmung 7 verhindert, wobei das Einsetzen des Drahtzuges 3 in die Hebelausnehmung 7 vor dem Einstecken der Drahtzughülle 4 in etwa in Axialrichtung der Hebelausnehmung 7 erfolgte, wie strichpunktiert in Fig. 1 dargestellt ist.

Fig. 6 zeigt eine Ausführung der Kugel 6 mit einstückig angespritztem, dem Drahtzugabschnitt 10 entsprechenden Zapfenansatz 15, wobei die Kugel 6 auf einem verformten Drahtzugende 16 aufgespritzt ist.

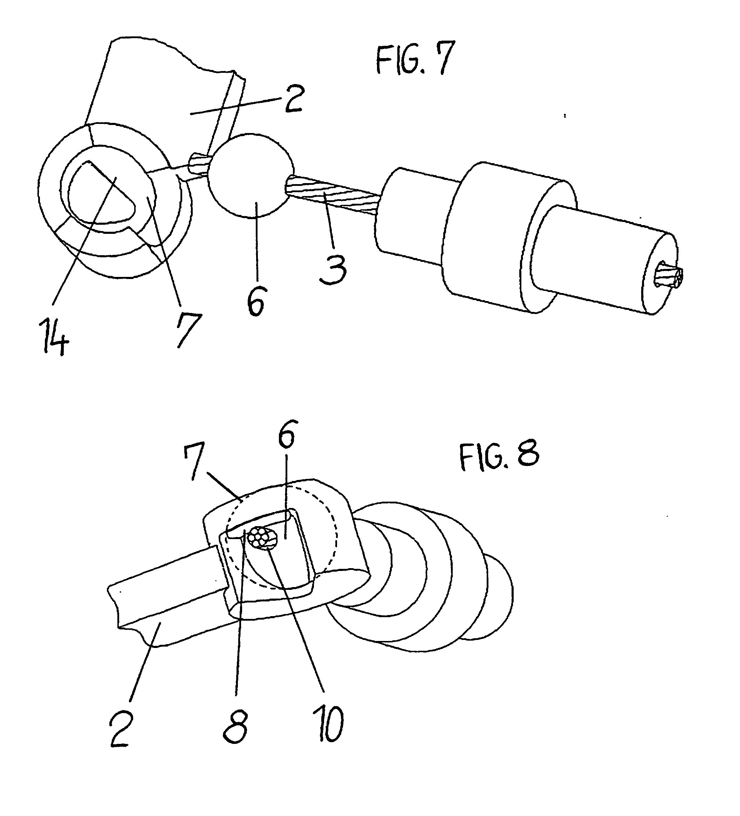

Fig. 7 und 8 zeigen eine weitere Ausführung, bei der die Hebelausnehmung 7 in einem aus Kunststoff bestehenden Formstück besteht.

## Patentansprüche

1. Hebel-Drahtzugverbindung (1) mit einer Hebelanordnung (2), die mittels Drahtzug (3) und Drahtzughülle (4) betätigt wird, wobei die Drahtzughülle (4) bei mit dem mit dem Hebel (2) verbundenen Drahtzug (3) in ein gehäusefestes Widerlager (5) eingesteckt und dort gesichert ist, **dadurch gekennzeichnet, daß** der Drahtzug (3) eine aufgepreßte oder angespritzte Kugel (6) aufweist, die mit dem Drahtzug (3) in eine zylindrische Hebelausnehmung (7) eingesetzt ist und innerhalb dieser Hebelausnehmung (7) in Axialrichtung der Hebelausnehmung (7) durch beiderseits des Hebels (2) an den Rändern (8, 9) der Hebelausnehmung (7) anliegende, beiderseits der kugel (6) abstehende Drahtzugabschnitte (10, 11) gehalten ist.

2. Hebel-Drahtzugverbindung nach Anspruch 1, **dadurch gekennzeichnet, daß** der Drahtzug (3) bei eingesteckter und gesicherter Drahtzughülle (4) und an den Rändern (8, 9) der Hebelausnehmung (7) anliegenden Drahtzugabschnitten (10, 11) in etwa parallel zur Hebelgrundfläche (12) steht und ein Hebelabschnitt (13) gegenüber der Hebelgrundfläche (12) unter einem spitzen Winkel (α) abgebogen ist.

3. Hebel-Drahtzugverbindung nach Anspruch 1 oder 2, **dadurch gekennzeichnet, daß** der Hebel (2) eine am Hebel (2) selbst oder in einem Formteil bestehende Hebelausnehmung (7) aufweist.

4. Hebel-Drahtzugverbindung nach einem der vorstehenden Ansprüche, **dadurch gekennzeichnet, daß** die Hebelausnehmung (7) einen kugelkalottenförmig ausgeformten Ansatz (14) aufweist, der ein Durchstecken der zwischen den Drahtzugabschnitten (10, 11) befindlichen Kugel (6) durch die Hebelausnehmung (7) verhindert.

5. Hebel-Drahtzugverbindung nach einem der vorstehenden Ansprüche, **dadurch gekennzeichnet, daß** die Kugel (6) einen einstückig angespritzten Zapfenansatz (15) aufweist und auf einem verformten Drahtzugende (16) aufgespritzt ist.

6. Hebel-Drahtzugverbindung nach einem der vorstehenden Ansprüche, **dadurch gekennzeichnet, daß** das Einsetzen des Drahtzuges (3) in die Hebelausnehmung (7) vor dem Einstecken der Drahtzughülle (4) in etwa in Axialrichtung der Hebelausnehmung (7) erfolgt.

## Claims

1. Lever wire pull connection (1) having a lever arrangement (2) which is actuated by means of a wire pull (3) and a wire pull casing (4), with, when the wire pull (3) is connected to the lever (2), the wire pull casing (4) being plugged into an abutment (5) that is fixed with respect to a housing and being secured therein, **characterised in that** the wire pull (3) has a sphere (6) that is pressed or injection-moulded thereon and is inserted with the wire pull (3) into a cylindrical lever recess (7) and is held within this lever recess (7) in an axial direction of the lever recess (7) by means of wire pull sections (10, 11) resting, on both sides of the lever (2), against the edges (8, 9) of the lever recess (7) and standing out on both sides of the sphere (6).

2. Lever wire pull connection according to claim 1, **characterised in that**, with the wire pull casing (4) plugged in and secured and with the wire pull sections (10, 11) resting against the edges (8, 9) of the lever recess (7), the wire pull (3) is substantially parallel to the lever base area (12), and a lever section (13) is bent off in relation to the lever base area (12) at an acute angle (α).

3. Lever wire pull connection according to claim 1 or 2, **characterised in that** the lever (2) has a lever recess (7) that is on the lever (2) itself or in a shaped portion.

4. Lever wire pull connection according to one of the preceding claims, **characterised in that** the lever recess (7) has a projection (14) which is formed so as to protrude in the form of a spherical cap and prevents the sphere (6) that is located between the wire pull sections (10, 11) from being plugged through the lever recess (7).

5. Lever wire pull connection according to one of the preceding claims, **characterised in that** the sphere (6) has a peg projection (15), which is injection-moulded thereon so as to be in one piece therewith, and is injection-moulded on a shaped wire pull end (16).

6. Lever wire pull connection according to one of the preceding claims, **characterised in that** the wire pull (3) is inserted into the lever recess (7), before the wire pull casing (4) is plugged in, in a substantially axial direction of the lever recess (7).

## Revendications

1. Jonction de levier avec tréfilage (1) avec un bras de levier (2) qui est actionné au moyen d'un tréfilage (3) et d'une gaine de tréfilage (4), sachant que la gaine de tréfilage (4) est raccordée à une butée (5) fixée au carter par le tréfilage (3) relié au levier (2) et y est protégée, **caractérisée en ce que** le tréfilage (3) comprend une bille (6) fixée par pression ou éclaboussée, qui est insérée dans une cavité cylindrique ménagée dans le levier (7) avec le tréfilage (3) et est maintenue à l'intérieur de cette cavité ménagée dans le levier (7) dans la direction axiale de la cavité ménagée dans le levier (7) par des parties de tréfilage..(10, 11) dépassant la bille (6) de part et d'autre et adjacentes aux bords (8, 9) de la cavité ménagée dans le levier (7) de part et d'autre du levier (2).

2. Jonction de levier avec tréfilage selon la revendication 1, **caractérisée en ce que** le tréfilage (3) est approximativement parallèle à la surface de base du levier (12) par une gaine de tréfilage (4) raccordée et protégée et des parties de tréfilage (10, 11) adjacentes aux bords (8, 9) de la cavité ménagée dans le levier (7) et une partie de levier (13) est courbée en formant un angle aigu (α) face à la surface de base du levier (12).

3. Jonction de levier avec tréfilage selon la revendication 1 ou 2, **caractérisée en ce que** le levier (2) comprend une cavité ménagée dans le levier (7) sur le levier lui-même (2) ou sous la forme d'un préformé.

4. Jonction de levier avec tréfilage selon l'une des revendications précédentes, **caractérisée en ce que** la cavité ménagée dans le levier (7) comprend une base (14) extrudée en forme de calotte sphérique, qui empêche un glissement de la bille (6) se trouvant entre les parties de tréfilage (10, 11) via la cavité ménagée dans le levier (7).

5. Jonction de levier avec tréfilage selon l'une des revendications précédentes, **caractérisée en ce que** la bille (6) comprend un dispositif de distribution (15) éclaboussé et d'un seul tenant et est projetée sur une extrémité de tréfilage (16) déformée.

6. Jonction de levier avec tréfilage selon l'une des revendications précédentes, **caractérisée en ce que** l'insertion du tréfilage (3) dans la cavité ménagée dans le levier (7) a lieu avant le raccordement à la gaine de tréfilage (4) dans une direction approximativement axiale de la cavité ménagée dans le levier (7).
